# EUROPÄISCHE PATENTSCHRIFT

(11) **EP 3 408 453 B1**
(45) Veröffentlichungstag und Bekanntmachung des Hinweises auf die Patenterteilung: **20.11.2019**
(21) Anmeldenummer: 17702546.7
(22) Anmeldetag: 20.01.2017
(51) Int. Cl.: E01C 11/22, E03F 3/04, E03F 5/10, F16L 41/02

(54) **OBERFLÄCHENENTWÄSSERUNGSEINRICHTUNG**
SURFACE DRAINAGE SYSTEM
DISPOSITIF DE DRAINAGE DE SURFACES

(30) Priorität: 25.01.2016 DE 102016101251
(43) Veröffentlichungstag der Anmeldung: 05.12.2018
(73) Patentinhaber: ACO Severin Ahlmann GmbH & Co. KG, 24782 Büdelsdorf (DE)
(72) Erfinder: MEINCKE, Arne, 24251 Osdorf (DE); IHRIG, Ralf, 60529 Frankfurt (DE)
(74) Vertreter: Kilchert, Jochen
(86) Internationale Anmeldenummer: PCT/EP2017/051157
(87) Internationale Veröffentlichungsnummer: WO 2017/129482

(56) Entgegenhaltungen:
- DE-U1- 29 700 390
- DE-U1- 29 700 390
- DE-U1-202005 004 634
- DE-U1-202013 012 216
- DE-U1-202013 012 216

## Beschreibung

Die Erfindung betrifft eine Oberflächenentwässerungseinrichtung nach dem Oberbegriff des Patentanspruches 1.

Abgedichtete Oberflächen, wie Straßen, Plätze oder dergleichen müssen entwässert werden. Dies geschieht im Allgemeinen durch offene Gerinne, also Rinnensysteme, die oben durch Roste abgedeckt sind. Ein solches Rinnensystem ist beispielsweise in der DE 297 00 390 U1 gezeigt. Die DE 20 2013 012 216 U1 zeigt eine Entwässerungsrinne, die als Mehrstockrinne ausgebildet ist. In der DE 20 2005 004 634 U1 ist ein Retentionsrinnenmodul zur unterirdischen Zwischenspeicherung von Oberflächenwasser beschrieben.

Weitere Oberflächenentwässerungseinrichtungen sind aus den EP2189584A1, US5529436A1, EP2918742A1, DE29602588U1 und US20660239773A1 bekannt.

Um auch bei Starkregen-Ereignissen eine ausreichende Entwässerungsleistung zu erzielen, werden Entwässerungsrinnen mit stromabwärts zunehmenden Entwässerungsquerschnitten - im Allgemeinen Stufengefälle - verwendet. Die Montage dieser Stufensysteme ist sehr aufwändig, da Entwässerungsrinnen mit unterschiedlichen Entwässerungsquerschnitten, also ansteigender Bauteilhöhe bei konstanter Nennweite miteinander kombiniert werden müssen. Dies verursacht erhöhte Baukosten und Planungskosten.

Es gibt bereits monolithische Entwässerungseinrichtungen, die einerseits einen oberen Einlaufabschnitt und andererseits mit diesem hydraulisch verbundene obere, erste Rohrabschnitte umfassen.

Bei Starkregen-Ereignissen kommen die beschriebenen Entwässerungsrinnen aufgrund ihrer konstruktiven Ablaufquerschnitte an die Grenzen der Entwässerungsleistung. Das Wasser wird nicht mehr vollständig von der Oberfläche abgeführt. Dies kann Unfälle verursachen und ist somit zu vermeiden.

Der Erfindung liegt die Aufgabe zu Grunde, eine Oberflächenentwässerungseinrichtung der eingangs genannten Art dahingehend aufzuzeigen, dass bei ähnlichem Aufwand erhöhte Entwässerungsleistungen sichergestellt werden können. Die Dimensionen, insbesondere die Breite der Oberflächenentwässerungseinrichtung soll weiterhin nicht übermäßig zunehmen.

Diese Aufgabe wird durch eine Oberflächenentwässerungseinrichtung nach Patentanspruch 1 gelöst.

Insbesondere wird diese Aufgabe durch eine Oberflächenentwässerungseinrichtung, umfassend einen durch aneinander ansetzbare Einzelelemente langgestreckten, in einen Boden einbaubaren Entwässerungskörper gelöst, wobei die Einzelelemente umfassen:
- einen Einlaufabschnitt, der derart in einem oberen Bereich der Einzelelemente angeordnet ist, dass Wasser in den Einlaufabschnitt einlaufen kann,
- mindestens einen unter dem Einlaufabschnitt angeordneten und mit diesem über Überleitungseinrichtungen kommunizierenden ersten, oberen Rohrabschnitt, wobei unter und/oder neben dem ersten Rohrabschnitt mindestens ein weiterer, mit dem ersten, oberen Rohrabschnitt kommunizierender zweiter Rohrabschnitt vorgesehen ist, wobei alle Rohrabschnitte mit entsprechenden Rohrabschnitten weiterer Einzelelemente dicht verbindbar sind.

Ein Vorteil aus dieser Anordnung mehrerer Röhren liegt darin, dass bei Starkregen-Ereignissen, sobald der Einlaufabschnitt und die Rohrabschnitte gefüllt sind, es zu einem hydrostatischen Effekt kommt, durch den die Abflussleistung nach dem Ansatz der kommunizierenden Röhren und somit nach den Regeln der geschlossenen Rohrhydraulik betrachtet werden kann. Hierbei wird bei fast gleichem Querschnitt die Abflussleistung des Gerinnes deutlich erhöht. Dieser Effekt lässt sich noch verstärken und wird frühzeitig einsetzen, wenn noch weitere Rohrabschnitt unter dem zweiten Rohrabschnitt angeordnet werden. Die Erhöhung der Abflussleistung resultiert nämlich aus dem steigenden hydrostatischen Druck. Die Erhöhung des hydrostatischen Druckes entspricht in etwa dem Abstand der untersten Rohrmitte zum Wasserspiegel der obenliegenden Einlaufabschnitte mal Wurzel aus 2. Es wird hier also eine erhebliche Steigerung der Abflussleistung erzielt. Grundlage der Berechnung ist die Bernoulli Gleichung "Freispiegel / Freistrahl" vereinfacht durch Toricelli.

Vorzugsweise sind die Rohrabschnitte in die Einzelelemente, und zwar vorzugsweise mittels Betonmaterial (Zement- oder Polymerbeton), Asphalt oder Kunststoff eingegossen. Dadurch entstehen monolithische Betonkörper, welche den Einzelelementen einen kompakten, leicht handhabbaren Grundkörper verleihen und dabei gleichzeitig eine erhöhte Ablaufleistung sicherstellen.

Vorzugsweise sind die Rohrabschnitte als Kunststoff- oder Metallrohrabschnitte als sog. "Inliner" ausgebildet. Es ist auch möglich, dass der Rohrabschnitt aus dem Vergussmaterial selbst besteht. Bei der Herstellung werden entsprechende Kerne in die Form des Grundkörpers eingebracht, die nach ihrem Entfernen den Rohrabschnitt bilden. Dadurch ergibt sich ein geringer Strömungswiderstand und damit eine hohe Ablaufleistung.

Vorzugsweise stehen Spitzenden der Rohrabschnitte aus den Einzelelementen hervor und Muffenenden der Rohrabschnitte verlaufen bündig mit den Stirnflächen der Einzelelemente. Auf diese Weise können die Einzelelemente dicht aneinander eingesteckt werden. Die Einzelelemente sind vorzugsweise an ihren Stirnflächen konkav nach unten zusammenlaufend ausgebildet. Dadurch kann man einerseits bei Montageungenauigkeiten die Einzelelemente zumindest an ihren oberen Kanten eng aneinander positionieren. Andererseits ist es möglich, vertikale Krümmungen im Bodenverlauf zu berücksichtigen.

Zusätzlich zu den Rohrabschnitten, welche abzuführende Flüssigkeit leiten, wird es bevorzugt, Leerrohre zum Einbau von elektrischen Leitungen oder dergleichen in den Einzelelementen vorzusehen. Derartige Leerrohre können auch für eine Löschwassereinspeisung oder eine Spülung verwendet werden. An einzelnen Punkten kann man die Leerrohre zum Beispiel über Sinkkästen mit den Rohrabschnitten verbinden und so z.B. bei einem Starkflüssigkeits-Ereignis (Starkregen oder Havarie-Fall in einem Tunnel) die überschüssige Flüssigkeit in dem Leerrohr zwischenspeichern. Der Sinkkasten kann dabei als Abscheider, z.B. Sedimentabscheider, Leichtflüssigkeitsabscheider, Fettabscheider oder dergleichen ausgebildet sein. Insbesondere im Tunnelbau kann der Sinkkasten mit einer Tauchwand ausgestattet sein, um im Brandfall eine Ausbreitung des Feuers durch das Entwässerungssystem zu verhindern. Es hat sich gezeigt, dass es besonders vorteilhaft ist, wenn ein Leerrohr z.B. für Heizvorrichtungen in der Nähe der Entwässerungsrinne bzw. der Rohrabschnitte angeordnet wird. Die Geometrie der Rohrabschnitte und der Leerrohre kann hierbei variieren. Das Leerrohr oder die Rohrabschnitte können z.B. aus Kunststoff, Metall, Beton oder auch Keramik bestehen. Der Grundkörper wiederum kann aus Beton, z.B. Zementbeton aber auch Polymerbeton oder anderen Betonen sowie aus Metall oder Kunststoff bestehen.

Vorzugsweise bestehen die Rohrabschnitte aus handelsüblichen Entwässerungsrohren mit einem Spitzende, einem Muffenende und einer O-RingDichtung sowie ggf. aus Y-Stücken und -Abzweigen, um die Rohrabschnitte miteinander zu verbinden. Dadurch kann kostengünstig gefertigt werden.

Die Einlaufabschnitte umfassen vorzugsweise Wannen mit Wannenabläufen, die mit den ersten Rohrabschnitten verbunden sind. Diese Einlaufabschnitte wiederum sind vorzugsweise aus Eisenguss gefertigt oder durch solchen verstärkt, so dass sehr kostengünstige aber stabile Einzelelemente entstehen.

Nachfolgend werden bevorzugte Ausführungsformen der Erfindung anhand von Abbildungen näher erläutert. Hierbei zeigen
- Fig. 1: eine einfache Ausführungsform der Erfindung mit zwei Einzelelementen 1 und 2, die aneinander angekoppelt sind,
- Fig. 2: die Anordnung nach Fig. 1 jedoch mit entferntem Gussmaterial sowie einer angehobenen Wanne zur Bildung eines Einlaufabschnittes und mit abgenommenem Ablaufrost,
- Fig. 3: eine schematisierte Darstellung eines Rinnenstranges mit aneinander gesetzten Einzelelementen,
- Fig. 4: eine Ausführungsform eines Einzelelementes mit einem Randstein,
- Fig. 5: eine Ausführungsform eines Einzelelementes zur Abtrennung von zwei Fahrbahnen voneinander,
- Fig. 6: eine Darstellung des Einzelelementes nach Fig. 5 jedoch ohne das Gießmaterial, und
- Fig. 7-9: verschiedene Ausführungsformen von Einzelelementen.

In der nachfolgenden Beschreibung werden für gleiche und gleichwirkende Teile dieselben Bezugsziffern verwendet.

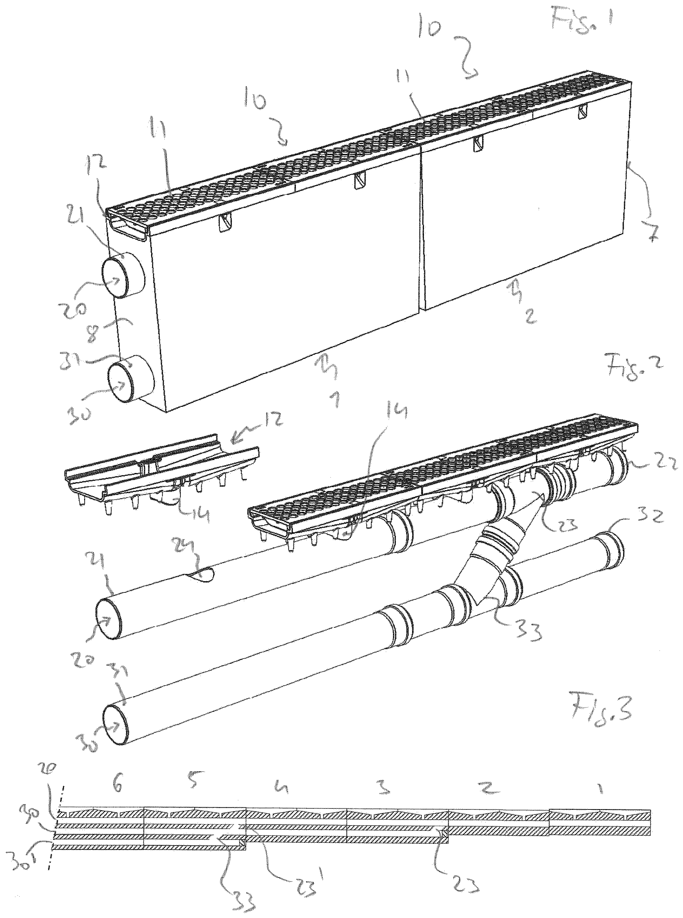

In Fig. 1 sind zwei aneinander gesetzte Einzelelemente 1 und 2 gezeigt, die jeweils an ihren Oberrändern Einlaufabschnitte 10 aufweisen, die mit Abdeckrosten 11 abgedeckt sind, unter denen Wannen 12 aus Gusseisen liegen. Die Wannen 12 sind in die aus Beton bestehenden Körper der Einzelelemente 1 und 2 eingegossen.

Weiterhin sind obere Rohrabschnitte 20 und untere, zweite Rohrabschnitte 30 vorgesehen, deren Spitzenden 21 bzw. 31 aus Stirnwänden 8 hervorragen. Die den Stirnwänden 8 gegenüberliegenden Stirnwände 7 der Einzelelemente 1 und 2 konvergieren von oben nach unten derart, dass auch bei relativ ungenauem Aufstellen der Einzelelemente auf ihr Fundament die Oberränder eng aneinander grenzend zusammengeschoben werden können. Darüber hinaus sind auch Krümmungen in Vertikalrichtung (Oberflächenunebenheiten) möglich.

In Fig. 2 ist nun "das Innenleben" der Einzelelemente 1 und 2 aus Fig. 1 gezeigt. Hieraus geht hervor, dass die Wannen 12, auf denen die Abdeckroste 11 liegen, Wannenabläufe 14 aufweisen, die in Einlauföffnungen 24 des ersten, oberen Rohrabschnittes 20 münden bzw. in diesen eingesteckt sind. Die nach unten ragenden Zapfen der Wannen 12 dienen lediglich der besseren Verankerung im Betonkörper.

Die Rohrabschnitte 20 und 30 des vorderen Einzelelementes 1 sind nicht miteinander verbunden. Die Rohrabschnitte 20 und 30 des zweiten Einzelelementes 2 jedoch sind über Y-Stücke 23 und 33 miteinander verbunden, so dass Wasser, das (in den Fig. 1-3 von rechts kommend) in das Muffenende 22 des oberen (rechten) Rohrabschnittes 20 einströmt, zumindest teilweise über die Y-Stücke 23 und 33 in den unteren Rohrabschnitt 30 geleitet wird.

In Fig. 3 ist nun gezeigt, wie man einen Rinnenstrang zusammenbauen kann.

Zunächst wird mit Einzelelementen 1 und 2 begonnen, die lediglich einen oberen Rohrabschnitt 20 umfassen. Wenn man nun von einer Situation ausgeht, bei welcher der obere Rohrabschnitt 20 durch das in die beiden Einzelelemente 1 und 2 einströmende Wasser bereits gefüllt ist, so könnte nun bei einem Fortsetzen von Einzelelementen mit nur einem einzigen oberen Rohrabschnitt 20 kein zusätzliches Wasser aufgenommen werden. Bei der hier aufgezeigten Anordnung setzt aber im dritten Einzelelement 3 ein Einzelelement mit einem unteren Rohrabschnitt 30 an und zwar über ein Y-Stück 23. Dadurch wird nun im oberen Rohrabschnitt 20 "sozusagen Platz geschaffen", so dass weiteres Wasser aufgenommen werden kann. Dies setzt sich fort durch einen dritten Rohrabschnitt 30', der in den Einzelelementen 5 und 6 vorgesehen ist. Diese Darstellung ist natürlich stark vereinfacht. Insbesondere wird durch die Erhöhung der Ablaufleistung der niedriger liegenden Rohrabschnitte 30 und 30' eine sehr hohe Gesamtablaufleistung möglich, so dass sehr viele Einzelelemente Oberflächenwasser aufnehmen können, bis eine zusätzliche Ablaufhilfe durch die weiteren Rohrabschnitte notwendig wird.

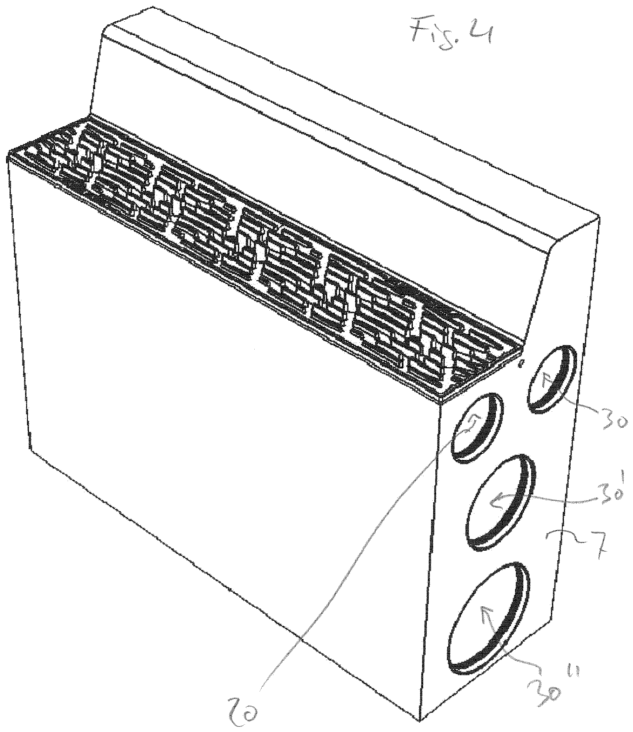

Bei der in Fig. 4 gezeigten Ausführungsform der Erfindung ist in das Einzelelement ein Bordstein integriert.

Weiterhin ist als Besonderheit anzusehen, dass der erste Rohrabschnitt 20, in welchen die Einlaufabschnitte 10 entwässern, mit einem im Wesentlichen parallel dazu liegenden zweiten Rohrabschnitt 30 kommuniziert, von dem aus dann darunterliegende zweite Rohrabschnitte 30', 30" mit Wasser "versorgt" werden. Die unteren Rohrabschnitte 30', 30" haben einen größeren Querschnitt. Dadurch kann man (wie dies bei einem weiteren Beispiel weiter unten noch gezeigt wird) dann, wenn die Querschnittsflächen der Rohrabschnitte zum Boden der Einzelelemente hin zunehmen, vorteilhafte geometrische Anordnungen erzielen.

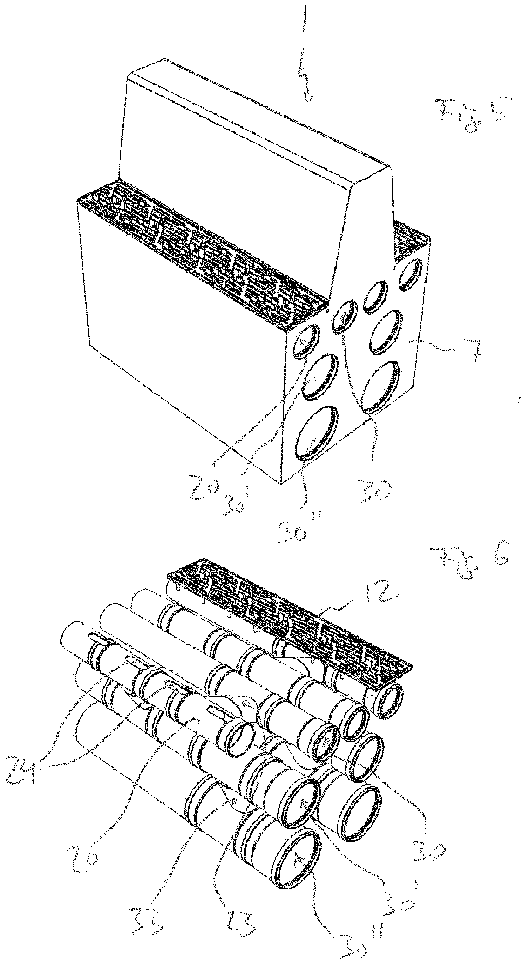

Bei der in Fig. 5 gezeigten Ausführungsform der Erfindung sind - zur Trennung von zwei Fahrbahnen voneinander - zwei Einzelelemente nach Fig. 4 Rücken an Rücken aneinandergebaut. Es ist leicht ersichtlich, dass hier sehr kompakte Bauelemente mit enorm hohen Entwässerungsleistungen entstehen. Bei dieser Ausführungsform ist der Einlaufabschnitt als einteilige Kammrinne ausgebildet. Dies bedeutet, dass die Wanne und Rost monolithisch ausgebildet sind. In Fig. 6 ist "das Innenleben" der in Fig. 5 beschriebenen Fahrbahntrennung mit Rohrabschnitten in verschiedenen Höhen und Rohrabschnitte mit verschiedenen Durchmessern gezeigt. Figur 6 zeigt des Weiteren, dass auch mehrere Rohrabschnitte 20, 30 in einer Ebene liegen können.

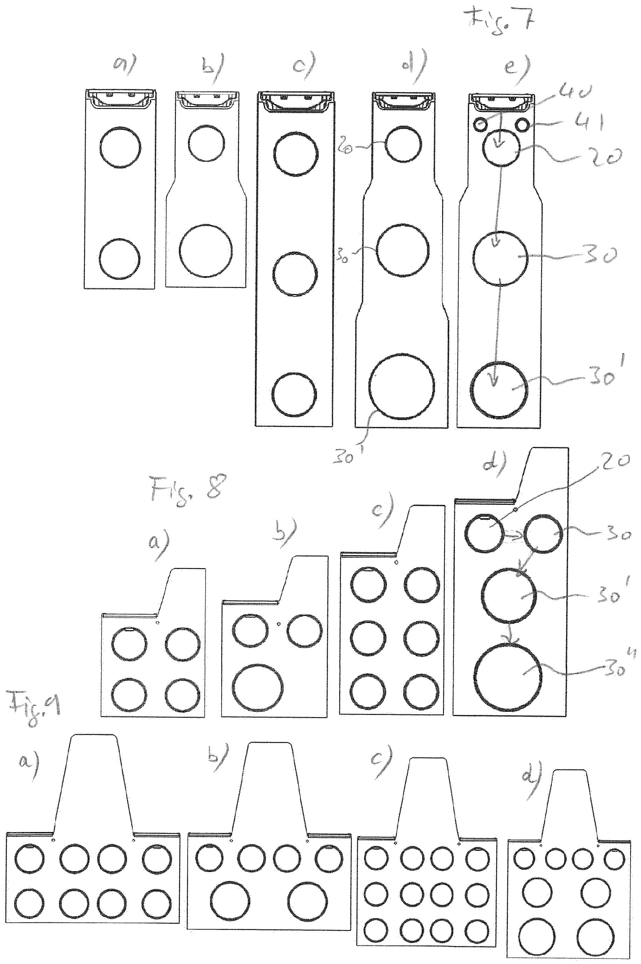

In den Fig. 7-9 sind nun verschiedene Anordnungen beschrieben, wobei ausdrücklich auf den Offenbarungsgehalt dieser Anordnungen verwiesen wird. Die Funktionsweise ist aus den vorherigen Beschreibungen leicht ersichtlich. Besonders hervorgehoben werden soll hier nur die Ausführungsform nach Fig. 7d und 7e), bei welcher zum einen im oberen Bereich Leerrohre 40 und 41 vorgesehen sind, welche nicht zur Wasserableitung dienen. Darüber hinaus nehmen die Querschnitte der Rohrabschnitte vom ersten Rohrabschnitt 20 über den zweiten Rohrabschnitt 30 bis zum dritten Rohrabschnitt 30' (Fig. 7d)) zu. Durch diese Zunahme der Querschnitte der Rohrabschnitte entsteht ein recht schlanker Kopf der Einzelelemente 1, so dass bei entsprechend parallelen Seitenwänden im Kopfbereich auf der Baustelle die angrenzenden Oberflächenbeläge (z.B. Asphalt, Pflaster, Beton) einer bestimmten Höhe ggf. mit einer Dehnungsfuge in üblicher Art und Weise einfach angearbeitet werden können.

Aus Obigem geht hervor, dass die Erfindung nicht nur die Einzelelemente sondern auch ein System betrifft, welches aus verschiedenen Einzelelementen, insbesondere solchen mit zunehmender Anzahl von Rohrabschnitten zusammengesetzt ist.

### Bezugszeichenliste

- 1-6: Einzelelement
- 7: Stirnfläche
- 8: Stirnfläche
- 10: Einlaufabschnitt
- 11: Abdeckrost
- 12: Wanne
- 14: Wannenablauf
- 20: Erster oberer Rohrabschnitt
- 21: Spitzende
- 22: Muffenende
- 23: Y-Stück
- 24: Einlauföffnung
- 30: Zweiter Rohrabschnitt
- 31: Spitzende
- 32: Muffenende
- 33: Y-Stück
- 40: Leerrohr
- 41: Leerrohr

## Patentansprüche

1. Oberflächenentwässerungseinrichtung, umfassend einen durch aneinandersetzbare Einzelelemente (1-6) langgestreckten in einen Boden einbaubaren Entwässerungskörper, wobei die Einzelelemente umfassen
- einen Einlaufabschnitt (10), welcher derart in einem oberen Bereich der Einzelelemente (1-6) angeordnet ist, dass Wasser in den Einlaufabschnitt (10) einlaufen kann,
- mindestens einen unter dem Einlaufabschnitt (10) angeordneten und mit diesem über Überleitungseinrichtungen (14, 24) kommunizierenden ersten, oberen Rohrabschnitt (20),
**dadurch gekennzeichnet, dass**
unter und/oder neben dem ersten Rohrabschnitt (20) mindestens ein weiterer, mit dem ersten Rohrabschnitt (20) kommunizierender zweiter Rohrabschnitt (30) vorgesehen ist, wobei alle Rohrabschnitte (20, 30, 30') mit entsprechenden Rohrabschnitten (20, 30, 30') weiterer Einzelelemente (1-6) dicht verbindbar sind.

2. Oberflächenentwässerungseinrichtung nach Anspruch 1,
**dadurch gekennzeichnet, dass**
die Rohrabschnitte (20, 30) in die Einzelelemente (1-6) eingegossen sind, vorzugsweise mittels Betonmaterial, Asphalt oder Kunststoff.

3. Oberflächenentwässerungseinrichtung nach einem der vorhergehenden Ansprüche,
**dadurch gekennzeichnet, dass**
die Rohrabschnitte (20, 30) Kunststoff- oder Metallrohrabschnitte sind.

4. Oberflächenentwässerungseinrichtung nach einem der vorhergehenden Ansprüche,
**dadurch gekennzeichnet, dass**
die Spitzenden (31) der Rohrabschnitte (20-30) aus den Einzelelementen (1-6) hervorstehen und Muffenenden (32) der Rohrabschnitte (20, 30) mit Stirnflächen (7, 8) der Einzelelemente (1-6) bündig enden.

5. Oberflächenentwässerungseinrichtung nach einem der vorhergehenden Ansprüche,
**dadurch gekennzeichnet, dass**
die Einzelelemente (1-6) an ihren Stirnflächen (7, 8) konkav nach unten zusammenlaufend ausgebildet sind.

6. Oberflächenentwässerungseinrichtung nach einem der vorhergehenden Ansprüche,
**dadurch gekennzeichnet, dass**
zusätzlich zu den Rohrabschnitten (20, 30) Leerrohre (40, 41) zum Einbau von elektrischen Leitungen in den Einzelelementen (1-6) vorgesehen sind.

7. Oberflächenentwässerungseinrichtung nach einem der vorhergehenden Ansprüche,
**dadurch gekennzeichnet, dass**
die Rohrabschnitte (20, 30) handelsübliche Entwässerungsrohre mit Spitzenden (21, 31), Muffenenden (22, 32) und O-Ring-Dichtungen und ggf. Y-Stücke (23, 33) und -Abzweigungen umfassen.

8. Oberflächenentwässerungseinrichtung nach einem der vorhergehenden Ansprüche,
**dadurch gekennzeichnet, dass**
die Einlaufabschnitte (10) Wannen (12) mit Wannenabläufen (14) umfassen, die mit den ersten Rohrabschnitten (20) verbunden sind.

9. Oberflächenentwässerungseinrichtung nach einem der vorhergehenden Ansprüche,
**dadurch gekennzeichnet, dass**
die Einlaufabschnitte (10) aus Eisenguss gefertigt oder durch solchen verstärkt sind.

## Claims

1. A surface drainage system, comprising a drainage body which is elongated due to single elements (1 to 6) that can be placed next to each other, and which can be installed in a ground, wherein the single elements comprise:
- an inlet section (10) arranged in an upper area of the single elements (1 to 6) such that water can flow into the inlet section (10),
- at least one first upper pipe section (20) arranged below the inlet section (10) and communicating with the inlet section (10) via transferring means (14, 24),
**characterized in that**
below and/or next to the first pipe section (20), at least one further, second pipe section (30) communicating with the first pipe section (20) is provided, wherein all of the pipe sections (20, 30, 30') are tightly connectable to further pipe sections (20, 30, 30') of further single elements (1 to 6).

2. The surface drainage system according to claim 1,
**characterized in that**
the pipe sections (20, 30) are molded into the single elements (1 to 6) preferably by means of concrete material, asphalt or plastic.

3. The surface drainage system according to any one of the preceding claims,
**characterized in that**
the pipe sections (20, 30) are plastic or metal pipe sections.

4. The surface drainage system according to any one of the preceding claims,
**characterized in that**
the spigot ends (31) of the pipe sections (20 to 30) protrude out from the single elements (1 to 6), and sleeve ends (32) of the pipe sections (20, 30) end flush with front faces (7, 8) of the single elements (1 to 6).

5. The surface drainage system according to any one of the preceding claims,
**characterized in that**
the single elements (1 to 6) are formed to be converging downward concavely at their front faces (7, 8).

6. The surface drainage system according to any one of the preceding claims,
**characterized in that**,
in addition to the pipe sections (20, 30), empty pipes (40, 41) for installing electric lines are provided in the single elements (1 to 6).

7. The surface drainage system according to any one of the preceding claims,
**characterized in that**
the pipe sections (20, 30) comprise commercially available drainage pipes having spigot ends (21, 31), sleeve ends (22, 32) and O-ring seals and, if needed, Y-pieces (23, 33) and Y-branches.

8. The surface drainage system according to any one of the preceding claims,
**characterized in that**
the inlet sections (10) comprise tubs (12) having tub outlets (14) connected to the first pipe sections (20).

9. The surface drainage system according to any one of the preceding claims,
**characterized in that**
the inlet sections (10) are manufactured from cast iron or reinforced by cast iron.

## Revendications

1. Dispositif de drainage de surfaces, comprenant un corps de drainage encastrable dans un sol et étiré longitudinalement par des éléments individuels (1 à 6) pouvant être placés les uns contre les autres, sachant que les éléments individuels comprennent
- une section d'admission (10), laquelle est disposée dans une zone supérieure des éléments individuels (1 à 6) de telle façon que de l'eau puisse s'écouler dans la section d'admission (10),
- au moins une première section tubulaire (20) supérieure disposée sous la section d'admission (10) et communiquant avec celle-ci via des dispositifs de transfert (14, 24),
**caractérisé en ce que**
sous et/ou à côté de la première section tubulaire (20), au moins une deuxième section tubulaire (30) supplémentaire communiquant avec la première section tubulaire (20) est prévue, sachant que toutes les sections tubulaires (20, 30, 30') sont reliables de manière étanche à des sections tubulaires (20, 30, 30') correspondantes d'éléments individuels (1 à 6) supplémentaires.

2. Dispositif de drainage de surfaces selon la revendication 1,
**caractérisé en ce que**
les sections tubulaires (20, 30) sont moulées dans les éléments individuels (1 à 6), de préférence moyennant un matériau en béton, de l'asphalte ou une matière synthétique.

3. Dispositif de drainage de surfaces selon l'une des revendications précédentes,
**caractérisé en ce que**
les sections tubulaires (20, 30) sont des sections tubulaires en matière synthétique ou en métal.

4. Dispositif de drainage de surfaces selon l'une des revendications précédentes,
**caractérisé en ce que**
les embouts mâles (31) des sections tubulaires (20-30) dépassent des éléments individuels (1 à 6), et des embouts femelles (32) des sections tubulaires (20, 30) se terminent de niveau avec des faces frontales (7, 8) des éléments individuels (1 à 6).

5. Dispositif de drainage de surfaces selon l'une des revendications précédentes,
**caractérisé en ce que**
les éléments individuels (1 à 6) sont constitués en convergeant de manière concave vers le bas au niveau de leurs faces frontales (7, 8).

6. Dispositif de drainage de surfaces selon l'une des revendications précédentes,
**caractérisé en ce que,**
en plus des sections tubulaires (20, 30), des tubes vides (40, 41) pour l'encastrement de lignes électriques sont prévus dans les éléments individuels (1 à 6).

7. Dispositif de drainage de surfaces selon l'une des revendications précédentes,
**caractérisé en ce que**
les sections tubulaires (20, 30) comprennent des tubes de drainage du commerce avec des embouts mâles (21, 31), des embouts femelles (22, 32) et des garnitures d'étanchéité à joint torique et éventuellement des pièces en Y (23, 33) et des branchements en Y.

8. Dispositif de drainage de surfaces selon l'une des revendications précédentes,
**caractérisé en ce que**
les sections d'admission (10) comprennent des cuvettes (12) avec des écoulements de cuvette (14) qui sont reliés aux premières sections tubulaires (20).

9. Dispositif de drainage de surfaces selon l'une des revendications précédentes,
**caractérisé en ce que**
les sections d'admission (10) sont fabriquées en fonte ou sont renforcées par telle.
